# EUROPÄISCHE PATENTSCHRIFT

(11) **EP 0 392 146 B1**
(45) Veröffentlichungstag und Bekanntmachung des Hinweises auf die Patenterteilung: **22.12.1993**
(21) Anmeldenummer: 90102265.7
(22) Anmeldetag: 06.02.1990
(51) Int. Cl.: F16C 33/46

(54) **Wälzlagerkäfig**
Rolling bearing cage
Cage de palier à roulement

(30) Priorität: 10.04.1989 DE 3911671
(43) Veröffentlichungstag der Anmeldung: 17.10.1990
(73) Patentinhaber: INA Wälzlager Schaeffler KG, 91063 Herzogenaurach (DE)
(72) Erfinder: Kraus, Gerhard, D-8521 Aurachtal (DE)

(56) Entgegenhaltungen:
- EP-A- 0 016 880
- DE-U- 8 715 732
- FR-A- 1 277 845

## Beschreibung

Die Erfindung betrifft einen Wälzlagerkäfig, insbesondere aus polymerem Werkstoff, der an einer Umfangsstelle einen durchgehenden Schlitz aufweist, wobei von dem einen, den Schlitz begrenzenden Käfigende ein oder mehrere Vorsprünge ausgehen, die so in Ausnehmungen am anderen Käfigende eingreifen, daß die beiden Käfigenden in beiden Radialrichtungen und beiden Axialrichtungen zueinander fixiert sind, in Umfangsrichtung sich jedoch relativ zueinander bewegen können.

Derartige bekannte Käfige werden häufig zur Lagerung von Zahnrädern auf Wellen in Schaltgetrieben von Kraftfahrzeugen verwendet. Diese Zahnräder laufen teils ohne Belastung gegenüber den Wellen um, während sie in einem anderen Betriebszustand, in dem sie ein Drehmoment übertragen, starr mit der Welle gekuppelt sind. In diesem letzteren Betriebszustand, in dem die in dem Käfig untergebrachten Wälzkörper keine Abrollbewegung durchführen, besteht die Gefahr, daß sich die Wälzkörper in ihre Laufbahnen eindrücken und diese damit beschädigen, was zum vorzeitigen Lagerausfall führt. Diese Gefahr kann durch Wälzlagerkäfige, die einen Schlitz aufweisen, beseitigt werden, weil sich diese unter Einwirkung der Fliehkraft etwas aufweiten und dabei spielfrei gegen die Wälzkörper anlegen können. Dadurch wird erreicht, daß auch in diesem Betriebszustand die Wälzkörper eine - wenn auch geringe - Abwälzbewegung durchführen.

In letzter Zeit treten beim Einsatz derartiger Käfige mitunter Probleme dadurch auf, daß diese Käfige mittels Robotern montiert werden. Wenn - was insbesondere bei Käfigen aus polymerem Werkstoff mitunter vorkommt - sich diese Käfige während des Transportes oder der Lagerhaltung etwas verformt haben, so daß sich die den Schlitz begrenzenden Käfigenden nicht mehr exakt einander gegenüberstehen, kann es vorkommen, daß der Roboter den Käfig nicht einwandfrei greifen kann, was zu Störungen im Montageablauf führt. Bei einem bekannten Käfig hat man versucht, dieses Problem dadurch auszuschalten, daß man im bereich des Schlitzes als elastische Stege ausgebildete Verbindungselemente vorgesehen hat, die einen gegenseitigen Versatz der Käfigenden zueinander verhindern sollten. Da diese elastischen Stege äußerst geringe Wanddicken aufweisen müssen, um keinen nachteiligen Einfluß auf den Käfig auszuüben, besteht die Gefahr, daß sie abbrechen, was, wenn sie im Lager verbleiben, zu dessen Zerstörung führen kann (DE-U-87 15 732).

In einer weiteren Käfigausführung die der vorgenannten Gattung entspricht, ist der Wälzlagerkäfig aus Segmenten zusammengesetzt (EP-A-00 16 880). Der Wälzagerkäfig ist unmittelbar im Bereich seiner Teilungsebenen, also an seinen aneinander angrenzenden Segmentenden einerseits mit Vorsprüngen, andererseits mit Ausnehmungen versehen, wobei die Vorsprünge in die Ausnehmungen eingreifen. Diese Verbindung gewährleistet nicht, daß die Segmentenden sowohl in Radial- als auch in Axialrichtung exakt zueinander fixiert sind. Wenn der Greifer eines Roboters diesen Käfig erfaßt, wirkt sich außerdem nachteilig aus, daß der Käfig dem Druck des Greifers nachgibt, indem der Käfigdurchmesser verringert wird. Ein einwandfreies Ergreifen ist deshalb bei diesem Käfig nicht möglich, außerdem wird die Montage des Käfigs erschwert bzw. gestört, da der nun im Durchmesser verringerte Käfig unter Umständen nicht mehr auf die Welle aufgeschoben werden kann.

Der Erfindung liegt die Aufgabe zugrunde, mit einfachen Mitteln und insbesondere ohne zusätzlichen Herstellungsaufwand einen derartigen Käfig so auszubilden, daß einerseits sichergestellt ist, daß die beiden den Schlitz begrenzenden Käfigenden einander einwandfrei gegenüberstehen, während sie sich andererseits in Umfangsrichtung ungehindert relativ zueinander bewegen können, der Käfig sich also in seinem Durchmesser vergrößern kann.

Diese Aufgabe wird nach dem Kennzeichen des Anspruchs 1 dadurch gelöst, daß am einen Käfigende, angrenzend an die Stirnflächen, in Umfangsrichtung vorstehende Leisten angeformt sind, denen entsprechende Freistellungen am anderen Käfigende gegenüberstehen, wobei an den einander zugewandten Stirnflächen der Leisten und Freistellungen einerseits Vorsprünge und andererseits Ausnehmungen in Form von in Umfangsrichtung verlaufenden Nuten vorgesehen sind, die formschlüssig ineinandergreifen, wobei die Nuten in Umfangsrichtung länger sind als die Vorsprünge.

Nach einer bevorzugten Ausführungsform der Erfindung soll wenigstens einer der Ausnehmungen eine dem zugehörigen Käfigende näher gelegene zweite Ausnehmung vorangestellt sein, in welche der Vorsprung formschlüssig eingreift, so daß die Käfigenden in dieser Position in allen Raumrichtungen zueinander fixiert sind, und daß der Vorsprung bei einer Verkleinerung des Käfigdurchmessers aus dieser zweiten Ausnehmung in die erste Ausnehmung überschnappt, wobei diese in Umfangsrichtung größer ist als der Vorsprung. Die Nuten sind hier durch Querstege von geringerer Höhe als die Nuttiefe in zwei Abschnitte unterschiedlicher Länge unterteilt, wobei die Vorsprünge formschlüssig in die kürzeren Nutabschnitte einrasten.

In den Zeichnungen ist ein Ausführungsbeispiel der Erfindung dargestellt. Es zeigen:
- Figur 1: einen Querschnitt durch ein gelagertes Zahnrad unter Anwendung eines erfindungsgemäßen Käfigs und
- Figur 2: eine ausschnittsweise perspektivische Darstellung des Schlitzbereiches eines erfindungsgemäßen Käfigs.

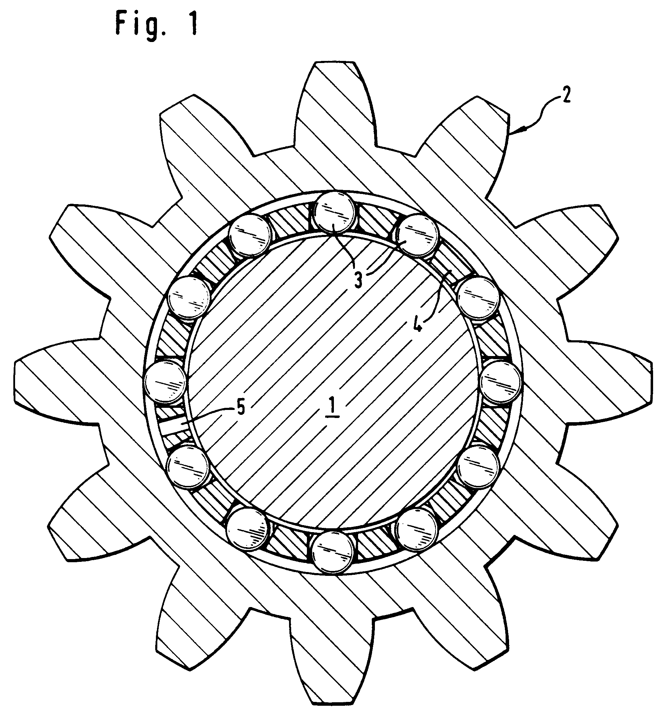

Figur 1 zeigt die Welle 1, auf der das Zahnrad 2 unter Zwischenschaltung von zylindrischen Wälzkörpern 3 gelagert ist. Die Wälzkörper 3 sind in dem Käfig 4 untergebracht, der an einer Umfangsstelle den durchgehenden Schlitz 5 aufweist.

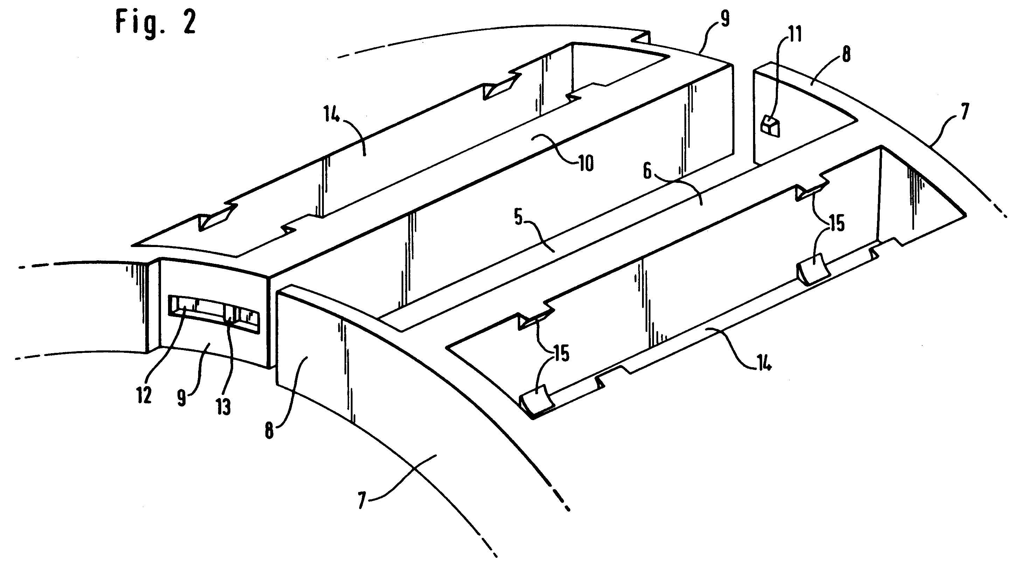

Die Figur 2 zeigt, daß an dem einen Käfigende 6 angrenzend an die Stirnflächen 7 in Umfangsrichtung vorstehende Leisten 8 angeformt sind, denen entsprechende Freistellungen 9 am anderen Käfigende 10 gegenüberstehen. An den einander zugewandten Stirnflächen der Leisten 8 und Freistellungen 9 sind einerseits an den Leisten 8, Vorsprünge 11 und andererseits an den Freistellungen 9 Ausnehmungen in Form von in Umfangsrichtung verlaufenden Nuten 12 vorgesehen, wobei im fertig montierten Zustand die Vorsprünge 11 formschlüssig in die Nuten 12 eingreifen. Da die Nuten 12 in Umfangsrichtung länger sind als die Vorsprünge 11, können sich die beiden Käfigenden 6 und 10 ungehindert relativ zueinander in Umfangsrichtung bewegen.

In den Nuten 12 sind weiterhin Querstege 13 vorgesehen, die eine geringere Höhe als die Tiefe der Nut 12 aufweisen und die die Nut 12 in zwei Abschnitte von unterschiedlicher Länge unterteilen. Die Vorsprünge 11 können dabei zunächst - im Anlieferzustand - in den kürzeren Bereich der Nut 12 eingreifen und sie können später durch einen von dem Greifer des Roboters ausgeübten Druck über die Querstege 13 in den längeren Bereich der Nut 12 übergeschnappt werden.

Die Figur 2 läßt weiterhin die Käfigtaschen 14 erkennen, die zur Aufnahme zylindrischer Wälzkörper, insbesondere Lagernadeln dienen, und in denen diese Wälzkörper durch Haltevorsprünge 15 am Herausfallen radial nach innen und außen gesichert sind.

## Patentansprüche

1. Wälzlagerkäfig, insbesondere aus polymerem Werkstoff, der an einer Umfangsstelle einen durchgehenden Schlitz (5) aufweist, wobei von dem einen, den Schlitz (5) begrenzenden Käfigende (6) ein oder mehrere Vorsprünge (11) ausgehen, die so in Ausnehmungen (12) am anderen Käfigende (10) eingreifen, daß die beiden Käfigenden (6, 10) in beiden Radialrichtungen und beiden Axialrichtungen zueinander fixiert sind, in Umfangsrichtung sich jedoch relativ zueinander bewegen können, **dadurch gekennzeichnet**, daß am einen Käfigende (6), angrenzend an die Stirnflächen (7), in Umfangsrichtung vorstehende Leisten (8) angeformt sind, denen entsprechende Freistellungen (9) am anderen Käfigende (10) gegenüberstehen, wobei an den einander zugewandten Stirnflächen der Leisten (8) und Freistellungen (9) einerseits Vorsprünge (11) und andererseits Ausnehmungen in Form von in Umfangsrichtung verlaufenden Nuten (12) vorgesehen sind, die formschlüssig ineinandergreifen, wobei die Nuten (12) in Umfangsrichtung länger sind als die Vorsprünge (11).

2. Wälzlagerkäfig nach Anspruch 1, **dadurch gekennzeichnet**, daß wenigstens einer der Ausnehmungen (12) eine dem zugehörigen Käfigende näher gelegene zweite Ausnehmung vorangestellt ist, in welche der Vorsprung (11) formschlüssig eingreift, so daß die Käfigenden in dieser Position in allen Raumrichtungen zueinander fixiert sind, und daß der Vorsprung (11) bei einer Verkleinerung des Käfigdurchmessers aus dieser zweiten Ausnehmung in die erste Ausnehmung (12) überschnappt, wobei diese in Umfangsrichtung größer ist als der Vorsprung (11).

3. Wälzlagerkäfig nach Anspruch 2, **dadurch gekennzeichnet**, daß die erste (12) und die zweite Ausnehmung gebildet sind, indem eine Nut (12) durch einen Steg (13) von geringerer Höhe als die Nuttiefe in zwei Abschnitte unterschiedlicher Länge unterteilt ist.

## Claims

1. Rolling bearing cage, in particular of polymeric material, comprising a through-slit (5) at one peripheral point, wherein one or more projections (11) project from the one cage end (6) defining the slit (5) and engage into recesses (12) on the other cage end (10) in such a way that the two cage ends (6, 10) are fixed relative to each other in both radial and both axial directions but are movable with respect to each other in the peripheral direction, characterized in that strips (8) projecting in the peripheral direction are formed adjoining the end faces (7) on the one cage end (6), opposite which strips (8), corresponding clearances (9) are located on the other cage end (10), there being disposed on the mutually facing end faces of the strips (8) and the clearances (9), on the one side, projections (11), and on the other side, recesses in the form of circumferentially extending grooves (12) which interlock with each other, the grooves (12) being longer in the peripheral direction than the projections (11).

2. Rolling bearing cage according to claim 1, characterized in that a second recess is disposed nearer to the cage end concerned, in front of at least one of the recesses (12), with which second recess the projection (11) interlocks so that in this position, the cage ends are fixed relative to each other in all spatial directions, and on a decrease of the cage diameter, the projection (11) snaps over from this second recess into the first recess (12), this latter being larger in the peripheral direction than the projection (11).

3. Rolling bearing cage according to claim 2, characterized in that the first recess (12) and the second recess are formed by the fact that one groove (12) is divided into two parts of differing length by a web (13) having a smaller height than the depth of the groove.

## Revendications

1. Cage de palier à roulement, en particulier en matière polymère, qui comprend, en un endroit de sa périphérie, une fente continue (5) dans laquelle une ou plusieurs saillies (11) s'étendent à partir de l'une (6) des extrémités de la cage définissant la fente (5) et qui s'engagent de telle façon dans des évidements (12) prévus sur l'autre extrémité (10) de la cage que les deux extrémités (6, 10) de celle-ci sont fixées l'une par rapport à l'autre dans les deux directions radiales et dans les deux directions axiales en étant toutefois mobiles l'une par rapport à l'autre en direction périphérique, caractérisée en ce que, sur l'une (6) des extrémités de la cage et au voisinage des faces frontales (7), sont formées des baguettes (8) faisant saillie en direction périphérique et en face desquelles sont situés, sur l'autre extrémité (10) de la cage, des dégagements (9) correspondants, alors que sur les faces frontales en vis-à-vis des baguettes (8) et des dégagements (9) sont prévus, d'un côté, des saillies (11) et, de l'autre côté, des évidements sous la forme de rainures (12) s'étendant en direction périphérique et qui s'interpénètrent par concordance de forme, lesdites rainures (12) étant plus longues en direction périphérique que lesdites saillies (11).

2. Gage de palier à roulement selon la revendication 1, caractérisée en ce que, devant au moins l'un des évidements (12), il est agencé un deuxième évidement qui est disposé plus près à l'extrémité correspondante de la cage et dans lequel la saillie (11) s'engage par concordance de forme de sorte que, dans cette position, les extrémités de la cage sont fixées l'une par rapport à l'autre dans toutes les directions d'espace, et que, lors d'une réduction du diamètre de la cage, la saillie (11) saute du deuxième évidement pour venir s'encliqueter dans le premier évidement (12), ce dernier étant plus grand en direction périphérique que la saillie (11).

3. Gage de palier à roulement selon la revendication 2, caractérisée en que les premier (12) et second évidements sont formés du fait qu'une rainure (12) est divisée en deux parties de longueur différente par une entretoise (13) ayant une hauteur plus faible que la profondeur de la rainure.
